# EUROPEAN PATENT APPLICATION

(11) **EP 4 134 356 A1**
(43) Date of publication of application: **15.02.2023**
(21) Application number: 21784444.8
(22) Date of filing: 06.04.2021
(51) Int. Cl.: C04B 28/26, C04B 18/26, C04B 111/40

(54) **CONSTRUCTION MATERIAL BASED ON WOOD AND GLASS**

(30) Priority: 08.04.2020 BG 11312020; 07.08.2020 BG 11321020
(71) Applicant: Nikolova, Ekaterina Dimitrova, 9450 Tervel (BG); Aronov, Liubcho Zdravkov, 9450 Tervel (BG)
(72) Inventor: Nikolova, Ekaterina Dimitrova, 9450 Tervel (BG); Aronov, Liubcho Zdravkov, 9450 Tervel (BG)
(74) Representative: Tahtadjiev, Konstantin
(86) International application number: PCT/BG2021/050001
(87) International publication number: WO 2021/203178

(57) **Abstract**

A construction material based on wood and glass, which is produced by mixing a filler in the form of ground wood and an aqueous solution of a silicate or a combination of silicates of several alkaline elements, after which the mixture is treated with carbon dioxide gas and given the necessary shape and density by die moulding. Then the material is again treated with carbon dioxide, as a result of which it hardens and becomes 15-20% lighter. The construction material is used for erecting formwork, casting and moulding non-load-bearing outer and inner partitions or walls, and for erecting walls made from finished blocks, panels, elements and joints, and is an insulator against high temperatures and active sunlight. Additionally, elements made of the construction material can be ground up and used again.

## Description

### FIELD OF THE ART

The material is mainly intended for use in construction, particularly in erecting formwork - for casting / moulding non-load-bearing outer and inner / partitions / walls, for erecting walls made from prefabricated blocks / panels, elements and joints from that material:
- it is used as a material for manufacturing various products, elements and assemblies through casting and/or pressing, replacing concrete, ceramic and silicate building items;
- used in combination with other substances and materials as insulation between other materials;
- used separately, in bulk and in bulk, including as gel.

The material may be used in-situ for casting or building/moulding walls and other forms and characteristics.

The material may initially be flowing, solid or in a gel form, depending on the method and purpose of its use, and depending on the weight ratio between the liquid components (water and water solution of silicates) and dry components of the material. The weight ratio between the water solution of silicate/silicates and wood may vary from 0,5:2 to 2,35:1.

### EXISTING STATE OF THE ART

So far it is known that solutions are mainly sought for the complete or partial replacement of aggregates/concrete; cement; gypsum, sand, lime, clay, etc./,used in construction in building walls due to the following problems;
- Environmental - in the production of materials and during their use, they contain and emit harmful substances and also do not allow waste treatment and reuse;
- Operational - high bulk density, high thermal conductivity, low, virtually absent vapour permeability, susceptibility to biological/bacterial influences. All buildings, made with aggregate, need additional insulation, heating or cooling, which comes at a cost - on a one-off or continuous basis. The problem of preventing overheating rooms is comparable to the problem of heating them, but there is a significant difference between insulation to keep rooms warm and insulation to prevent overheating and the necessary cooling.

So far, the material 'arbolite' is known. It is made of wood and concrete. Theare are already some production facilities and buildings in Europe, Russia and North America. When mixing wood, sand, cement and water, the volumetric weight and thermal conductivity of the building blocks are partially reduced and their vapour permeability is slightly improved. Issues with carbon dioxide emissions during cement production and then during operation, however, remain. When mixing sawdust with sand and cement, the problem of the thermal insulation properties of wood concrete remains, which precludes it from being a good insulator.

It is also known that parts of the stem/straw/of the hemp plant are mixed with quicklime or clay - in Europe and North America, where hemp cultivation is allowed. However, clay is poorly permeable to steam and retains water, resulting in high humidity in the room, which has a negative impact on human health. Lime and hemp straw require compaction to achieve a certain strength, which increases the bulk density, thermal conductivity of the material and consequently the accumulation and release of a large amount of energy.

Mixing of wood and resins is also known - China, but only for insulation boards, not for building elements. Products made of material containing wood and resin are exposed to weather conditions, have low vapour permeability, emit harmful substances and are flammable. Of course, there are resins which, once cured, pose no hazard to human health, others are heat-resistant, others yet are not that flammable, but these resins are expensive and do not have all these qualities.

Kaolin (clay) is known to be mixed with liquid glass, peat and flax straw to make parget.The problem is that kaolin, like clay, is vapour permeable and contains aluminium compounds that have been proven to be harmful to humans. Clay doesn't absorb - it does not hold most of the plaster and paint. The ability of peat to heat-up, its thermal conductivity and heat release are directly related to the chemical composition, molecular structure of the substance, as well as its weight, mass, volume. The thermal parameters of peat species are variable and absolutely uncertain due to the dependence on the above conditions and cannot be used as an insulator; moreover, peat is used as a fuel, which makes its use as a parget composition inefficient.
When sawdust is mixed with cement, sand, limestone or clay used as binders/adhesives, its thermal insulation properties are impaired and they are basically rendered useless as an insulator against external heat from high temperatures and active sun heat;
Also, as a result of mixing sawdust with cement, gypsum, sand, limestone or clay, the vapour permeability of wood or cellulosic sawdust is significantly reduced;

### TECHNICAL NATURE OF THE INVENTION

The material GLASS WOOD provides low bulk density of building elements combined with high resistance to heat transfer and low thermal conductivity coefficient - these are all qualities of an insulator from external thermal effects and solar heat. Waste from the paper industry and power plants that use wood fuel, namely various types of lye and wood ash, is used for GLASS WOOD, which solves another environmental problem - the storage and disposal of process waste that otherwise contains harmful substances only when it exists in free form. The alkaline medium of aqueous silicate solutions interacts with and neutralises the acidic compounds contained in the lye and wood ash, and also interacts with the unburnt carbon in the ash, thereby acting on the organic pollutants by solidifying and absorbing them. Calcium oxide in lye and wood ash, when reacted with water, stabilizes Al -950 ppm; Ni -720 ppm; Cr -220 ppm; Cu - 2000 ppm

When mixing sawdust and glass, the positive properties of the wooden parts of the material are retained:
- very low thermal conductivity of 0,065 W / m * K;
- vapour permeability -ng / 9 Pa s m) 50-80;
- low specific gravity - 350-720 kg/m3

Sawdust has one of the lowest coefficients of thermal conductivity of 0,065 W/m*K or it is one of the best natural thermal insulators and is superior to solid wood. Wood crushed stone has a small specific gravity of - 250 kg / m3.

GLASS WOOD has a specific gravity of 420 kg/m3, and concrete - 2300 kg/m3.

The thermal resistance of sawdust and concrete /R/ is as follows: the resistance is equal to the thickness of the material divided by the thermal conductivity coefficient of the material, where for sawdust with a thickness of 30 cm - 0,30 m and and thermal conductivity of 0,065 W/mK, the resistance R is 4,615 and for concrete with a thickness of 30 cm -0,30 m and a thermal conductivity coefficient of 1,3 W/mK, the resistance R is 0,23, as the U values represent the amount of heat that flows in 1 s between the surrounding element and the environmental air through a surface of 1 m2 when the temperature difference is 1 K /, are respectively one divided by R, or for sawdust material U \u003d 1: 4615 \u003d 0,217 W/m2K, and for concrete U \u003d 1: 0,23 \u003d 4,348 W/m2K. Or about 20 times less heat passes from sawdust than from concrete.

Glass in its forms - as a solution of silicates and gel - has approximately the same insulating properties, which are, however, better than 0.035 W/m*K. The solidified aqueous silicate solution compacts the sawdust without affecting the thermal conductivity of the material. Aqueous silicate solution /water content evaporates/ does not significantly increase the specific gravity of the material of 350-720 kg/m3. The density and specific gravity of the material can be changed and adjusted. The aqueous silicate solution firmly and stably binds the sawdust without sealing it. The mixture of aqueous silicate solution with sawdust retains very good vapour permeability to steam very well.

By mixing wood and an alkaline silicate solution, new wood and material properties are created:
- practically incombustible;
- antibacterial, biologically inactive;
- insoluble in water;
- contains/releases no harmful substances;
- absorbs carbon dioxide;
- recyclable.

Aqueous sodium silicate solution obstructs sawdust burning, making it virtually non-flammable. It has antibacterial action. In practice, the already cured GLASS WOOD material containing a solution of silicate and calcium, salts or acids /technical derivatives/ is insoluble in water. The fresh material can be cast or pressed. Also, already cured material can be cut with a disc. It allows after drying to make holes in it without destroying it.

### OBTAINING THE MATERIAL

GLASS WOOD is most easily obtained by mixing sawdust and an aqueous solution of silicate or a combination of silicates of several alkaline elements. For example, we have a combination of aqueous solutions of sodium and potassium silicates in a 50:50 ratio with 3 and 1.7 moduli, viscosities over 200, specific gravities over 1400 kg/m3 and dry weights of 35 -56%. The wood particles are made from hard deciduous wood ground through a No 9 sieve. The sawdust to silicate aqueous solution weight ratio can range from 3.5:1 to 1:2.5.

In a 2:1 to 1.2:1 ratio, after mixing the two ingredients, the material is treated with carbon dioxide and then given the desired shape and density by pressing into a mould. After pressing, it is again treated with carbon dioxide. The liquid glass interacts with the carbon dioxide, releasing heat and evaporating the water. The moisture in the material evaporates and after 24 hours the material is 15-20% lighter than its original total weight. The carbon dioxide causes the material to harden.

At a ratio of 1:2 the material is suitable for casting without carbon dioxide treatment.

The main methods of preparation are - mixing 1000 g of sawdust with 900 g of aqueous solution of alkali silicate with a density of 1.35 / 1.44 g / cm2 with a modulus of 2.8 / 3.8 and
- 500 g of aqueous solution of CaCl2 with a density of 1.26-1.36 g cm2;
- or with only 90 g of CaCl2. Na2 [SiF6] methods achieve compressive strengths up to several /5-7/MPa.

Calcium carbonate and/or calcium oxide in the form of green liquid and/or wood ash dissolved in carbonated water (saturated with carbon dioxide) can be added to the above aqueous solution of alkali silicates. During the reaction of alkali silicates with carbon dioxide, heat is released and the water evaporates, and the calcium carbonate dissolves in the aqueous solution, with the help of carbon dioxide and reacts with a silicone group to form a silicate, the material solidifies and becomes insoluble in water. By absorbing additional carbon dioxide, the material becomes stronger. The material continues to cure, releasing water over a period of 30 days. For example, for 1000 grams of sawdust of sieve size No 6, 160 grams of green lye and wood ash are dissolved in 500 grams of carbonated water and 900 g of an aqueous solution of alkaline silicate with a modulus of 1,7/2,4 and a density of 1,67/1,5 g/m2 and a dry matter of 56%/35% are added to the resulting solution. Sawdust is mixed with the aqueous solution and pressed into shape. As the size of the sawdust decreases, the green lye and wood ash content remains the same, while the water content and the amount of aqueous silicate solution increases. In the same way, but with an increased dosage of aqueous silicate solution /2: 1/ with a higher modulus of 2,6 - 4,2, material suitable for casting is obtained.

Green lye and wood ash are used as chemicals rather than bulk fillers. The weight ratio between sawdust and green lye is 5:1, the latter having no strong influence on the density and thermal conductivity of the finished material.

The first, second and third variants are possible, so that the wood wool can be impregnated with the described aqueous solutions. The material may also be glass - all substances and compounds mentioned in the claim.

The material allows interaction with all types of plasters and paints. It may come into contact with them when wet - for example by being poured simultaneously between the concrete elements during their formation. It is possible to form elements - blocks of GLASS WOOD with one or two-sided cement coating. The upper part of the already dried material can be parguetted, plastered or painted, as with concrete. No inert materials will be used to bond the individual GLASS WOOD elements /silicate adhesives/, avoiding thermal bridging between the exterior and interior environment.

## Claims

1. GLASS WOOD - A material that insulates against external heat from high air temperatures and active sunlight, it is used alone and in combination with other substances and materials by bulk and casting methods, including in gel form, it is also used as a material for the manufacture of various products, components and assemblies, it is **characterised by** being composed of wood and glass and is obtained by combining and/or mixing wood and glass.
A.1. Wood in GLASS WOOD, obtained from the processing of: wood and/or wood parts of plants and/or secondary skin tissue of plants, all containing three components: lignin, cellulose and hemicellulose:
A.1.1. particles of maximum size through a sieve No 14 including;
A.1.2. wood wool;
A.2. The wood in the GLASS WOOD also contains particles of bark and/or cork.
B.1 The glass in GLASS WOOD is aqueous solutions of silicates of alkaline elements /sodium, potassium, lithium/:
B.1.1. Aqueous solutions with the general formula xSiO2: M2O.zH2O and moduli from 1,2 to 4,2 (note that M stands for an alkali element):
B.1.2. The solution forms 20% to 70% of the total weight of the material GLASS WOOD.
B.1.3. An aqueous solution of one silicate;
B.1.4. An aqueous solution of a combination of sodium and potassium silicates;
B.1.5. An aqueous solution of a combination of sodium and/or potassium silicate with lithium silicate.
B.2. The glass in GLASS WOOD represents compounds between solutions of silicates of alkaline elements and elements and compounds interacting with them:
B.2.1. with alkaline earth metals and their compounds;
B.2.2. with weak acids and salts.
B.3. The glass in GLASS WOOD is also a combination of silica SiO2 and alkaline solutions.
B.4. The glass in GLASS WOOD is a compound of silica and also its derivatives:
B.4.1. SiO2 + 4NaOH → (2Na2O) · SiO2 + 2H2O sodium orthosilicate;
B.4.2. SiO2 + CaO → CaO · SiO2 metasilicate of calcium;
B.4.3. Na2CO3 + CaCO3 + 6SiO2 → Na2O · CaO · 6SiO2 + 2CO2 ↑ or mixed silicate of sodium and calcium;
B.4.4. SiO2 + 6HF → H2 [SiF6] + 2H2O.
